# EUROPEAN PATENT APPLICATION

(11) **EP 4 683 002 A1**
(43) Date of publication of application: **21.01.2026**
(21) Application number: 25183595.5
(22) Date of filing: 18.06.2025
(51) Int. Cl.: H01M 4/70, H01M 10/0585, H01M 10/04

(54) **BATTERY CELLS, SEMI-FINISHED STACKED BATTERY CELLS STRUCTURE AND THE POSITIONING METHOD THEREOF**

(30) Priority: 15.07.2024 TW 113126387
(71) Applicant: Prologium Technology Co., Ltd., Taoyuan City (TW)
(72) Inventor: YANG, Szu-Nan, Taoyuan City (TW); SU, Jian-Hua, Taoyuan City (TW)
(74) Representative: Cabinet Chaillot

(57) **Abstract**

The invention provides a battery cell (20), semi-finished stacked battery cells structure and the positioning method thereof. The battery cell (20) includes a positive and a negative current collector (41, 42), which respectively includes an active material coating zone (411, 421), a glue frame adhering zone (54a, 54b), an electric output zone (413, 423) and a remaining zone considered as invalid zone (22). At least two through holes (23) are located at the invalid zone (22). The battery cells (20) will be positioned by positioning pins (32) inserted into the through holes (23) of a plurality of stacked battery cells (20). After welding the positive and the negative electric output zones (413, 423), the invalid zones (22) are cut to make the energy density be maximized for the stacked battery cells (20).

## Description

### BACKGROUND OF THE INVENTION

### CROSS REFERENCES TO RELATED APPLICATIONS

The present application claims priority to Taiwanese Patent Application 113126387 filed in the Taiwanese Patent Office on July 15, 2024, the entire contents of which is being incorporated herein by reference.

### Field of Invention

The present invention relates to a positioning method for stacking battery cells and its structure.

### Related Art

New energy vehicles are gradually being promoted and applied in the market. The power batteries are one of the three core technologies of new energy electric vehicles. Therefore, the structural protection and thermal management of the power batteries are considered as a very important part of the new energy vehicles. Also, to increase cruising range for new energy electric vehicles, the trends of lightweight design and increased energy density have become inevitable.

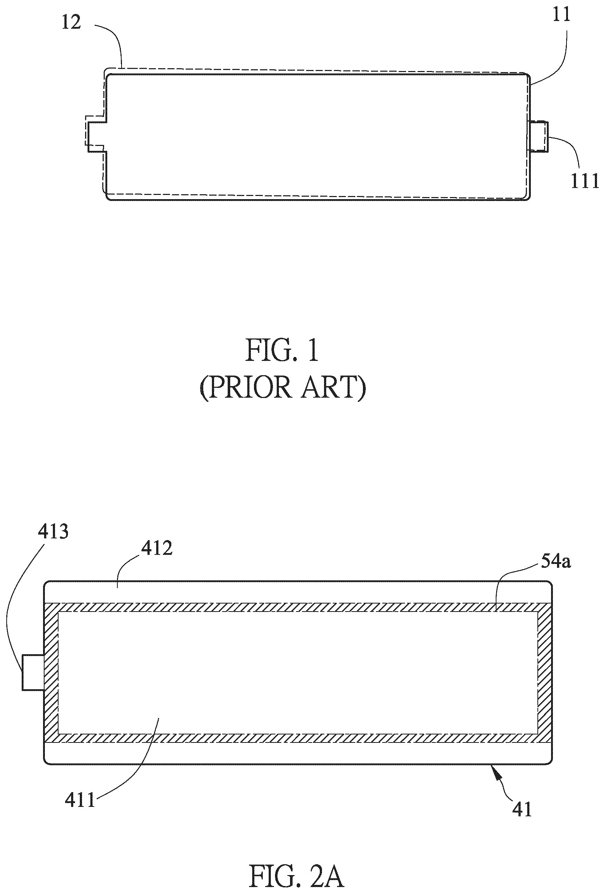

In the current stacking process of large-sized battery cells, as illustrated in FIG. 1, the stacked battery cells have to be positioned in order to ensure the subsequent welding of the tabs 111 proceeding smooth. As shown in the figure, after stacking the first battery cell 11 and the second battery cell 12, vertical positioning and adjustment are typically performed via using visual imaging on both sides. Then the angular deviations are compensated by center-point rotations. However, as the length and width of battery cells continue to increase, the difficulty of positioning also rises. In particular, the center-point rotational alignment tends to amplify edge misalignment several times due to angular errors.

To solve this problem, the common practices include using higher-precision correction platforms or increasing the number of visual imaging and correction cycles. However, these methods not only raise costs but also significantly reduce the speed of stacking and alignment, thereby increasing manufacturing expenses. On the other hand, although there are solutions on the market that utilize clamping fixtures for positioning, the mechanisms required to accommodate such fixtures will occupy a certain volume, which in turn negatively affects the energy density of the assembled battery module.

Therefore, this invention provides a battery cells, semi-finished stacked battery cells structure and the positioning method to mitigate or obviate the aforementioned problems.

### SUMMARY OF THE INVENTION

It is an objective of this invention to provide a battery cell, semi-finished stacked battery cells structure and the positioning method thereof. A simple and high-precision positioning mechanism is achieved by the cooperation of through holes and positioning pins. After the tabs are welding, the invalid zones where the through holes are cut off, thereby improving the energy density of the subsequently assembled battery module.

In order to implement the abovementioned, this invention discloses a battery cell, which includes a positive current collector, a negative current collector and at least two through holes. The positive current collector includes a positive active material coating zone, a positive glue frame adhering zone completely surrounding the positive active material coating zone, a positive electric output zone being outside the positive glue frame adhering zone and a first frame zone being outside the positive glue frame adhering zone and not overlapping the positive electric output zone. The negative current collector includes a negative active material coating zone, a negative glue frame adhering zone completely surrounding the negative active material coating zone, a negative electric output zone being outside the negative glue frame adhering zone and a second frame zone being outside the negative glue frame adhering zone and not overlapping the negative electric output zone. The first frame zone and the second frame zone are defined as invalid zones. The through holes are located at the invalid zones and penetrating through the positive current collector and the negative current collector.

Therefore, at least two positioning pins may be introduced to insert into the through holes of a plurality of stacked battery cells, which are stacked along a single axis. The battery cells will be positioned to form a semi-finished stacked battery cells structure. This structure is configured to enable subsequent welding between the positive and negative electric output zones. After welding, the invalid zones are cut to increase the energy density of the subsequently assembled battery module.

Moreover, this invention discloses a positioning method for battery cells, including the steps of:
providing a plurality of above-mentioned battery cells;
providing at least two positioning pins corresponding to the through holes;
stacking the battery cells sequentially via the positioning pins inserting the through holes of the battery cells;
welding the positive electric output zones and the negative electric output zones of the battery cells respectively; and
cutting off the invalid zones containing the through holes.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow illustration only, and thus are not limitative of the present invention, and wherein:
FIG. 1 is a schematic diagram of the conventional stacking battery cells for alignment correction.
FIG. 2A is a schematic diagram of the positive current collector of the battery cell of this invention.
FIG. 2B is a schematic diagram of the negative current collector of the battery cell of this invention.
FIGS. 3A-3B are crossed sectional views of the battery cell of this invention.
FIG. 4A is a schematic diagram of the battery cell with the through holes of this invention.
FIG. 4B is a schematic diagram of the through holes with the elastic members inserting inside of the battery cell of this invention.
FIG. 5A is a schematic diagram of the stacked battery cells of this invention.
FIG. 5B is a schematic diagram of the semi-finished stacked battery cells structure of this invention.
FIG. 6 is a schematic diagram of the semi-finished stacked battery cells structure of this invention, showing the removal of the invalid zones.

### DETAILED DESCRIPTION OF THE INVENTION

The present invention will be described with respect to particular embodiments and with reference to certain drawings but the invention is not limited thereto but only by the claims. Any reference signs in the claims shall not be construed as limiting the scope. The drawings described are only schematic and are non-limiting. In the drawings, the size of some of the elements may be exaggerated and not drawn on scale for illustrative purposes.

The terminology used herein is for the purpose of describing particular embodiments only and is not intended to be limiting of the general inventive concept. As used herein, the singular forms "a", "an" and "the" are intended to include the plural forms as well, unless the context clearly indicates otherwise. Unless otherwise defined, all terms (including technical and scientific terms) used herein have the same meaning as commonly understood by one of ordinary skill in the art to which example embodiments belong. It will be further understood that terms, such as those defined in commonly used dictionaries, should be interpreted as having a meaning that is consistent with their meaning in the context of the relevant art and should not be interpreted in an idealized or overly formal sense unless expressly so defined herein.

Reference throughout this specification to "one embodiment" or "a specific embodiment" means that a particular feature, structure or characteristic described in connection with the embodiment is included in at least one embodiment of the present invention. Thus, appearances of the phrases "in one embodiment" or "in a specific embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

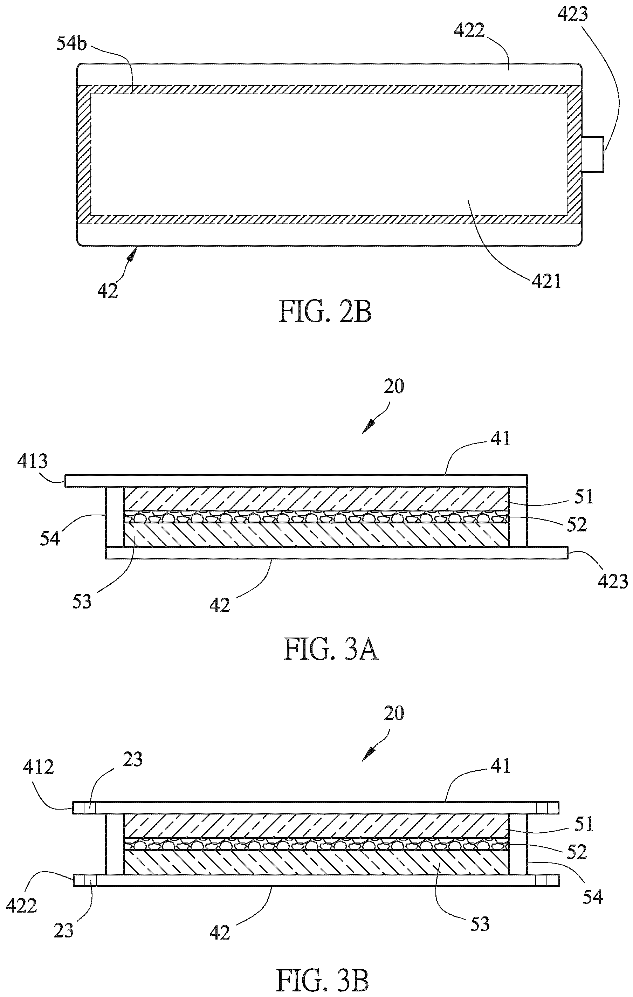

According to the battery cell disclosed in the present invention, please refer to FIG. 3A, which includes a positive current collector 41 and a negative current collector 42. A positive active material 51, a separator 52, and a negative active material 53 are sequentially sandwiched between the positive current collector 41 and the negative current collector 42, and the periphery thereof is enclosed and sealed using a glue frame 54. Next, please also refer to FIGS. 2A and 2B. The positive current collector 41 is generally in the form of a rectangular thin sheet, with one end (left side in the drawing) extending outward to form a positive electric output zone 413. The central portion is the positive active material coating zone 411, which is used for coating the positive active material 51. The positive glue frame adhering zone 54a is completely surrounding the positive active material coating zone 411. The remaining zone of the positive current collector 41, excluding the positive active material coating zone 411, the positive glue frame adhering zone 54a, and the positive electric output zone 413, is defined in this application as a first frame zone 412. As shown in the figure, the first frame zone 412 is approximately outside the positive glue frame adhering zone 54a and not overlapping the positive electric output zone 413.

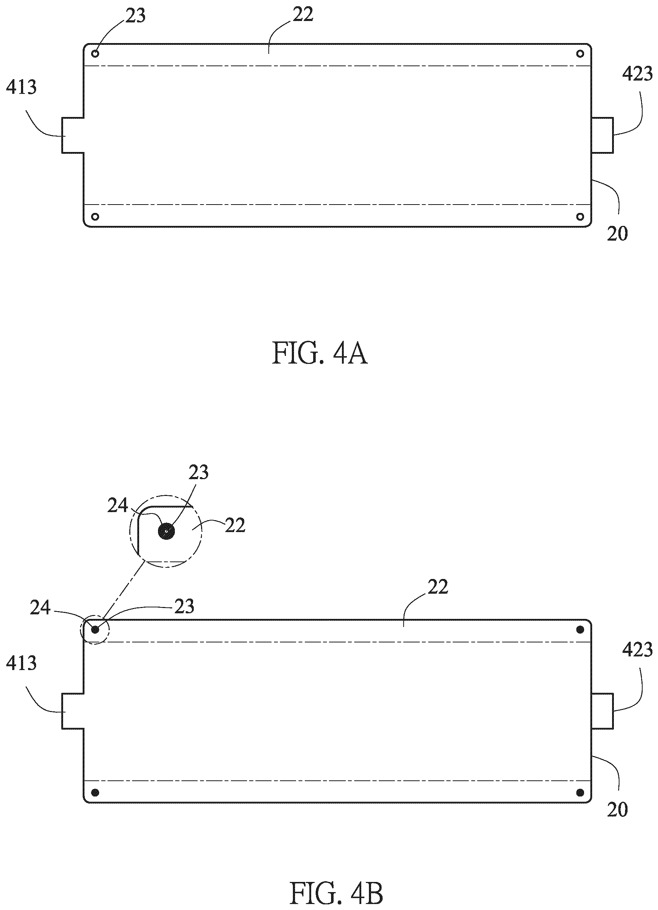

Similarly, the negative current collector 42 corresponds to the positive current collector 41 and is also generally in the form of a rectangular thin sheet. One end (right side in the drawing) extends outward to form a negative electric output zone 423. The central portion is the negative active material coating zone 421, which is used for coating the negative active material 53. The negative glue frame adhering zone 54b is completely surrounding the negative active material coating zone 421. The remaining zone of the negative current collector 42, excluding the negative active material coating zone 421, the negative glue frame adhering zone 54b, and the negative electric output zone 423, is defined in this application as a second frame zone 422. As shown in the figure, the second frame zone 422 is approximately outside the negative glue frame adhering zone 54b and not overlapping the negative electric output zone 423. The first frame zone 412 and the second frame zone 422 are defined as invalid zones 22, see FIG. 4A.

The glue frame 54 is sandwiched between the positive current collector 41 and the negative current collector 42. The top surface of the glue frame 54 is bonded to the positive glue frame adhering zone 54a of the positive current collector 41 and surrounds the periphery of the positive active material 51. The bottom surface of the glue frame 54 is bonded to the negative glue frame adhering zone 54b of the negative current collector 42 and surrounds the periphery of the negative active material 53.

Then, please refer to FIGS. 3B and 4A. For the positive current collector 41 and the negative current collector 42 in the present invention, the positive active material coating zone 411 and the negative active material coating zone 421 where the positive active material 51 and the negative active material 53 are located, the positive glue frame adhering zone 54a, the negative glue frame adhering zone 54b, the positive electric output zone 413, and the negative electric output zone 423 are defined as the valid zone. In contrast, the first frame zone 412 and the second frame zone 422 are defined as the invalid zone 22. The battery cell 20 in this invention has a length not less than 300 mm and a width not less than 90 mm. The positive electric output zone 413 and the negative electric output zone 423 are located on different sides of the battery cell 20. As illustrated in the figures, the positive electric output zone 413 and the negative electric output zone 423 are located on the left and right sides of the battery cell 20, respectively. The invalid zones 22 are located on the top and bottom sides of the battery cell 20.

At least two through holes 23 are formed in the invalid zones 22 of the battery cell 20. The positions of the through holes 23 must avoid the regions where the glue frame 54 is adhered in order to prevent damage to the glue frame 54 during later cutting, which could affect the sealing of the battery cell 20. A more detailed description will be presented below. The through holes 23 are designed for subsequent stacking alignment purposes. Therefore, at least two through holes 23 are provided to achieve basic positioning. As shown in the drawings, the battery cell 20 is generally rectangular in shape. Accordingly, at least one through hole 23 is provided on each of the top and bottom invalid zones 22. Of course, to achieve optimal alignment, the through hole 23 may be formed at each of the four corners, i.e. at both ends of the top and bottom invalid zones 22. It is specifically noted that, as mentioned above, the invalid zone 22 is located outside the adhesion region of the glue frame 54. Please also refer to FIG. 3B. The through holes 23 penetrate through the positive current collector 41 and negative current collector 42 and are outside the glue frame 54. In other words, the positive current collector 41 and negative current collector 42 are extended outward, at least along the sides corresponding to the invalid zones 22, and beyond the glue frame 54, i.e. the top and bottom sides in the figures, to allow formation of the through holes 23. Furthermore, please refer to FIG. 4B. An elastic member 24 may be installed inside the through hole 23. The elastic member 24 is generally ring-shaped with a central opening and is inserted into the through hole 23 to enhance the hole-fitting and the alignment accuracy during subsequent stacking. The more detailed description will be presented below.

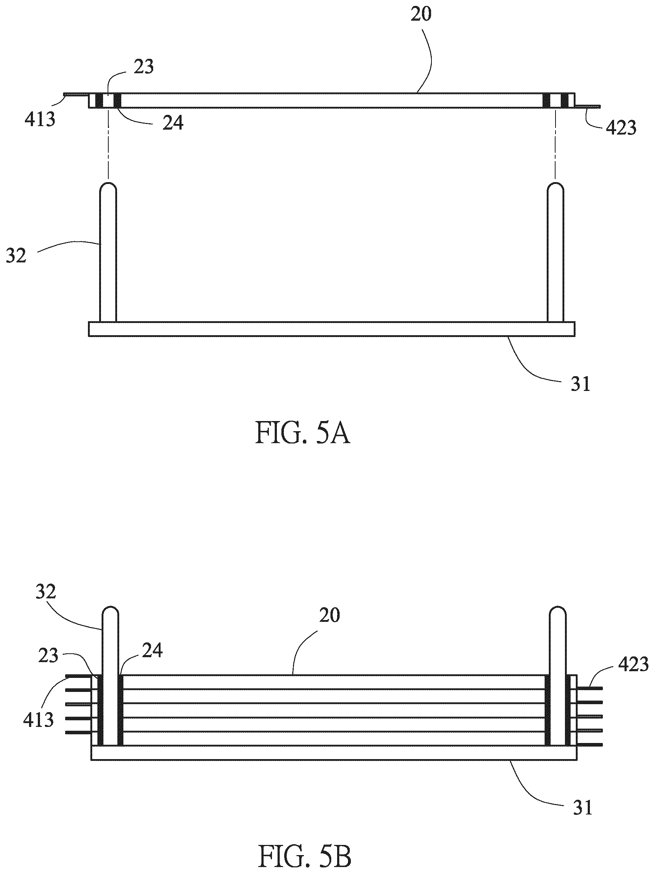

Then, please refer to FIGS. 5A and 5B. Positioning pins 32 are provided on a base 31 at locations and in quantities corresponding to the aforementioned through holes 23. The front ends of the positioning pins 32 are formed with guide inclined surfaces to facilitate insertion of the battery cell 20. During placement, the through holes 23 of the battery cell 20 are aligned with the corresponding positioning pins 32 such that the positioning pins 32 pass through the central holes of the elastic members 24 disposed in the through holes 23. Since the elastic members 24 are made of a material with an elasticity and the central holes are slightly smaller than the outer diameter of the positioning pins 32, the insertion of the battery cell 20 causes the elastic members 24 to generate resiliency force, thereby automatically aligning and positioning the battery cell 20. In this manner, the battery cells 20 are stacked vertically in sequence to form a semi-finished stacked battery cells structure including multiple stacked battery cells 20. Because this approach utilizes structural relative positioning combined with the design of the elastic members 24, it enables control of misalignment in the semi-finished stacked battery cells structure within design tolerances, thereby significantly improving positioning accuracy.

The stacking configuration of the above-mentioned battery cells 20 may vary depending on the desired electrical connection design. For example, adjacent stacked battery cells 20 may have current collectors with the same polarity aligned to form a parallel connection, or opposite polarities aligned to form a series connection. In the overall semi-finished stacked battery cells structure, the battery cells 20 may be connected in full series, full parallel, or a combination of series and parallel connections. Subsequently, the positive electric output zone 413 and/or the negative electric output zone 423 of adjacent battery cells 20 are welded together to establish electrical connections between the adjacent battery cells 20.

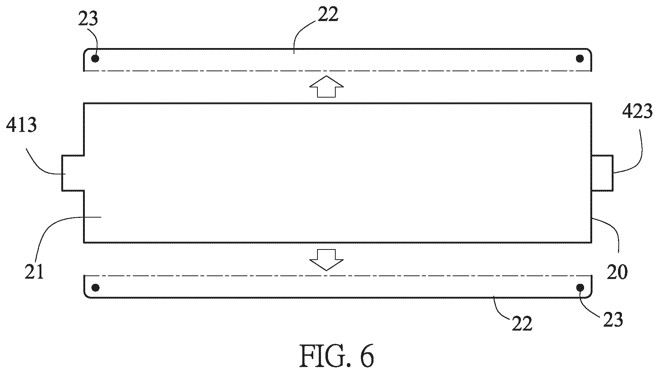

After welding, there is no longer a risk of relative displacement or misalignment between the battery cells 20. Therefore, as shown in FIG. 6, the invalid zones 22, together with the through holes 23 therein, may be removed. The removal method may be selected based on the thickness and material characteristics of the battery cell 20, and may include punching, laser cutting, rotary cutting or other techniques. As mentioned previously, the invalid zone 22 lies outside the glue frame 54. Please also refer to FIGS. 2A, 2B and 3B, removal of this invalid zone 22 does not affect the normal operation of the battery cell 20. After removal, the energy density of the battery cell 20 can be maximized. Moreover, depending on design requirements or structural limitations of the battery cell 20, only one side or a portion of the invalid zone 22 may be removed if necessary.

Accordingly, the present invention provides a battery cell, semi-finished stacked battery cells structure and the positioning method thereof. By providing at least two through holes within the invalid zone of the battery cell, and placing elastic members inside the through holes in combination with the use of positioning pins, the misalignment during battery cells stacking can be controlled within tolerance, thereby significantly improving positioning accuracy and greatly reducing equipment costs. After welding the electric output zones, the invalid zones together with the through holes can be cut off. The energy density of the subsequently assembled battery device will be maximized. Moreover, the structure of the present invention enables the positioned semi-finished stacked battery cells structure to be transported between process stations in the manufacturing plant. Therefore, it is greatly enhanced the flexibility of equipment allocation and deployment within the manufacturing plant.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A battery cell (20), comprising:
a positive current collector (41), having a positive active material coating zone (411), a positive glue frame adhering zone (54a) completely surrounding the positive active material coating zone (411), a positive electric output zone (413) being outside the positive glue frame adhering zone (54a) and a first frame zone (412) being outside the positive glue frame adhering zone (54a) and not overlapping the positive electric output zone (413);
a negative current collector (42), having a negative active material coating zone (421), a negative glue frame adhering zone (54b) completely surrounding the negative active material coating zone (421), a negative electric output zone (423) being outside the negative glue frame adhering zone (54b) and a second frame zone (422) being outside the negative glue frame adhering zone (54b) and not overlapping the negative electric output zone (423), wherein the first frame zone (412) and the second frame zone (422) are defined as invalid zones (22); and
at least two through holes (23), located at the invalid zones (22) and penetrating through the positive current collector (41) and the negative current collector (42).

2. The battery cell (20) of claim 1, further comprising a glue frame (54) sandwiched between the positive current collector (41) and the negative current collector (42), wherein a top surface of the glue frame (54) is adhered to the positive glue frame adhering zone (54a) and a bottom surface of the glue frame (54) is adhered to the negative glue frame adhering zone (54b).

3. The battery cell (20) of claim 1, wherein at least one elastic member (24) is disposed in the through holes (23).

4. The battery cell (20) of claim 1, wherein a length of the battery cells (20) does not smaller than 300 mm and a width of the battery cells (20) does not smaller than 90 mm.

5. A positioning method for battery cells (20), comprising the steps of:
providing a plurality of battery cells (20) of claim 1;
providing at least two positioning pins (32) corresponding to the through holes (23);
stacking the battery cells (20) sequentially via the positioning pins (32) inserting the through holes (23) of the battery cells (20);
welding the positive electric output zones (413) and the negative electric output zones (423) of the battery cells (20) respectively; and
cutting off the invalid zones (22) containing the through holes (23).

6. The positioning method of claim 5, wherein a front end of the positioning pin (32) includes a guide inclined surface.

7. A semi-finished stacked battery cells structure, comprising:
a plurality of battery cells (20) of claim 1, which are vertically stacked; and
at least two positioning pins (32), which are inserting into the aligned through holes (23) respectively of the stacked battery cells (20) for positioning the battery cells (20).

8. The semi-finished stacked battery cells structure of claim 7, wherein any two adjacent stacked battery cells (20) are faced to the other one via the positive current collectors (41) or the negative current collectors (42) with the same polarity.

9. The semi-finished stacked battery cells structure of claim 7, wherein any two adjacent stacked battery cells (20) are faced to the other one via the positive current collectors (41) or the negative current collectors (42) with different polarities.

10. The semi-finished stacked battery cells structure of claim 7, wherein the stacked battery cells (20) are electrically connected to each other via the positive electric output zones (413) and the negative electric output zones (423).
